# EUROPEAN PATENT APPLICATION

(11) **EP 4 636 009 A1**
(43) Date of publication of application: **22.10.2025**
(21) Application number: 23903524.9
(22) Date of filing: 13.12.2023
(51) Int. Cl.: C08G 64/04, C08K 5/10, C08L 69/00, G02B 1/04

(54) **RESIN COMPOSITION**

(30) Priority: 14.12.2022 JP 2022199621
(71) Applicant: MITSUBISHI GAS CHEMICAL COMPANY, INC., Chiyoda-ku Tokyo 100-8324 (JP)
(72) Inventor: ISHIKAWA, Shun, Kamisu-shi, Ibaraki 314-0102 (JP); KATO, Noriyuki, Tokyo 100-8324 (JP); NISHIMORI, Katsushi, Tokyo 125-8601 (JP); MOTEGI, Atsushi, Tokyo 125-8601 (JP); ISHIHARA, Kentaro, Tokyo 100-8324 (JP); MURATA SUZUKI, Shoko, Tokyo 125-8601 (JP); SUGA, Tatsuya, Tokyo 125-8601 (JP); FUKUI, Kiyoshiro, Tokyo 125-8601 (JP); MATSUMOTO, Mutsumi, Tokyo 125-8601 (JP)
(74) Representative: Hoffmann Eitle
(86) International application number: PCT/JP2023/044559
(87) International publication number: WO 2024/128240

(57) **Abstract**

Provided is a thermoplastic resin composition with excellent optical properties, having high fluidity and good moldability without compromising properties of optical resin compositions, and having a compositional makeup that can prevent gelatinization (increase in molecular weight). The present invention provides a polycarbonate resin including: a constituent unit (A) derived from a diol represented by the formula (1) below; and a constituent unit (B) represented by the formula (2) below and/or a constituent unit (C) represented by the formula (3) below:

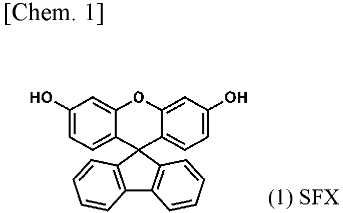

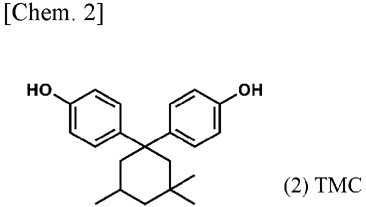

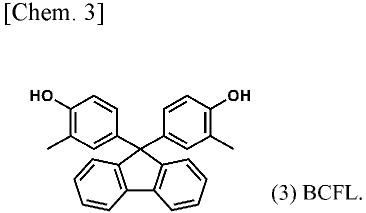

## Description

### Technical Field

The present invention relates to a resin composition. In further detail, the present invention relates to a resin composition containing a thermoplastic resin and a specific compounding agent.

### Background Art

As a material of optical lenses used in optical systems of various types of cameras such as a camera, a camera integrated with a film and a video camera, optical glass or optical resin is used. Optical glass excels for example in heat resistance, transparency, dimension stability and chemical resistance, but involves disadvantages such as high material cost, poor moldability and low productivity.

In contrast, optical lenses made from optical resin have an advantage of being capable of mass production by injection molding, and resins such as polycarbonate, polyester carbonate and polyester resin are used as high refractive index materials for camera lenses.

Optical resin used as an optical lens requires properties such as heat resistance, transparency, low water absorption, chemical resistance, low birefringence and moist heat resistance, in addition to optical properties such as refractive index and Abbe's number. In particular, optical lenses with a high refractive index and a high heat resistance have been required recently, and the development of various types of resins are in progress (cf. Patent Literature 1 to Patent Literature 5).

Especially, a polycarbonate resin containing a constituent unit (A) derived from a diol represented by the formula (1) has a high refractive index and is useful as an optical material; it also has a high Tg and is promising as a highly heat-resistant optical material. In contrast, such a polycarbonate resin, however, requires a high molding temperature during molding due to its high Tg (cf. Patent Literature 6).

However, the above polycarbonate resin has been found to be prone to uncontrollable trouble due to a phenomenon of increasing molecular weight during kneading (extruding) or molding where various types of additives are compounded. Probably, it can be assumed that such a phenomenon occurs due to a gelatinization reaction caused by a chain branching reaction.

Thus, as the polycarbonate resin containing a constituent unit (A) derived from a diol represented by the formula (1), a polycarbonate resin having a compositional makeup that can prevent the above gelatinization (increase in molecular weight) while maintaining a high refractive index within a range where the polycarbonate resin, as an optical material, causes no practical problem, is still in demand.

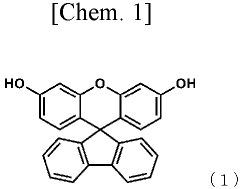

### Citation List

### Patent Literature

Patent Literature 1: JP 2018-002893 A
Patent Literature 2: JP 2018-002894 A
Patent Literature 3: JP 2018-002895 A
Patent Literature 4: JP 2018-059074 A
Patent Literature 5: WO 2017/078073 A1
Patent Literature 6: JP 2020-114907 A

### Summary of Invention

### Technical Problem

The present invention provides a thermoplastic resin composition with excellent optical properties, having high fluidity and good moldability without compromising the properties of optical resin compositions. More specifically, the present invention provides, as the polycarbonate resin containing a constituent unit (A) derived from a diol represented by the formula (1), a polycarbonate resin having a composition that can prevent the above gelatinization (increase in molecular weight) while maintaining a high refractive index within a range where the polycarbonate resin, as an optical material, causes no practical problem. The present invention also provides a polycarbonate resin having a high reflow heat resistance.

### Solution to Problem

As a result of intensive studies made to solve the above problem, the present inventors found that by adding a specific compounding agent to a thermoplastic resin, a thermoplastic resin composition having a composition capable of preventing gelatinization (increase in molecular weight), a low Tg, high fluidity, good moldability and excellent optical properties can be obtained, and thereby completed the present invention.

The present invention includes the aspects below:
<1> A polycarbonate resin containing
   a constituent unit (A) derived from a diol represented by the formula (1) below, and
   a constituent unit (B) represented by the formula (2) below and/or a constituent unit (C) represented by the formula (3) below: 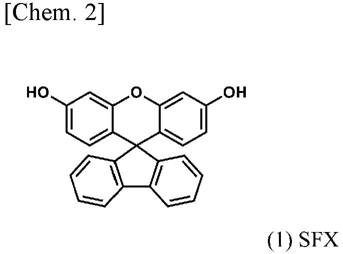 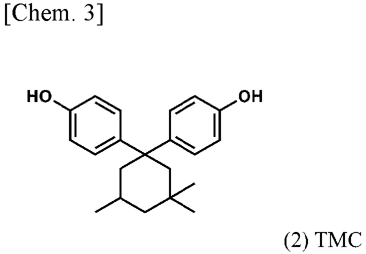 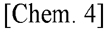 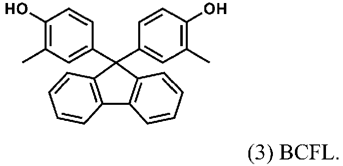
<2> A polycarbonate resin containing at least a constituent unit (A) derived from a diol represented by the formula (1) below and a constituent unit (B) derived from a diol represented by the formula (2) below: 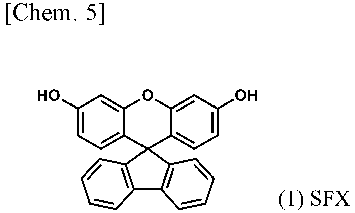 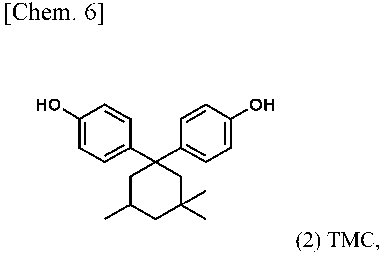 in which total light transmittances before and after a reflow heat resistance test satisfy the relationship represented by the formula (I) below: Total light transmittance before reflow heat resistance test (%) / Total light transmittance after reflow heat resistance test (%) = 0.9 to 1.3 (I).
<3> The polycarbonate resin described in the above <1> or <2>, in which the molar ratio of the constituent unit (A) to the constituent unit (B) and/or the constituent unit (C) (A : B + C) is 20 : 80 to 80 : 20.
<4> A polycarbonate resin composition containing the polycarbonate resin described in the above <1> or <2> and one or more of compounds represented by the formulae (4), (5), (6), (7) and (8) below: 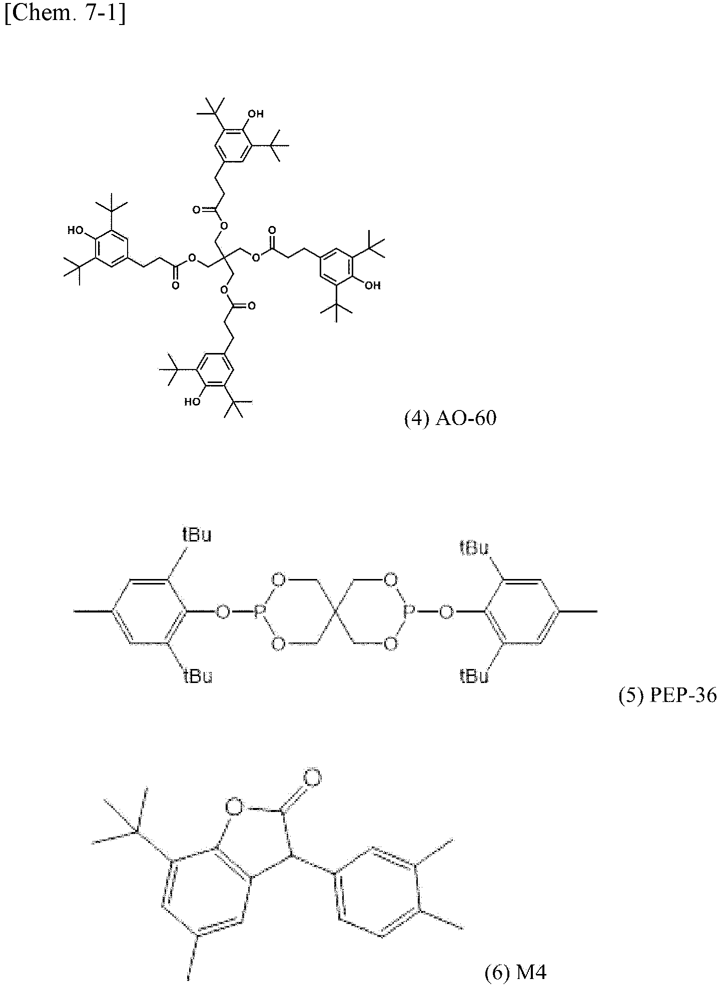 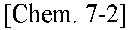 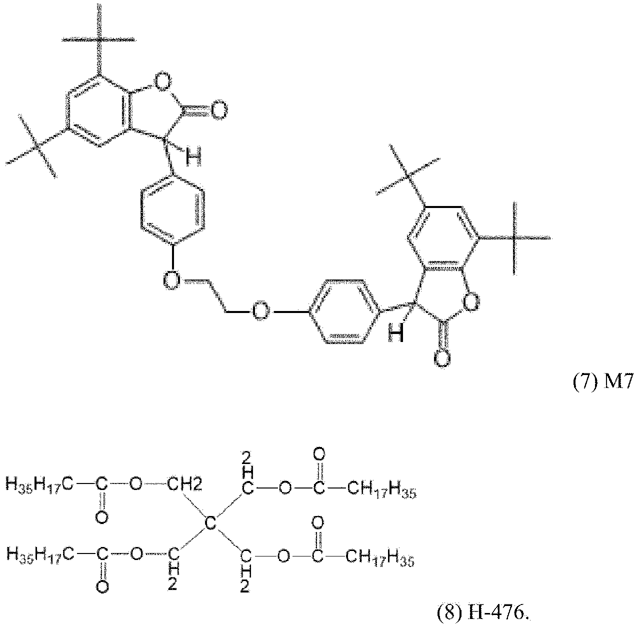
<5> The polycarbonate resin composition described in the above <3>, containing 1 ppm to 1% by mass of the compounds represented by the formulae (4), (5), (6), (7) and (8).
<6> The polycarbonate resin described in the above <1> or <2> or the polycarbonate resin composition described in the above <4>, having a glass transition temperature (Tg) of 230°C to 290°C.
<7> The polycarbonate resin described in the above <1> or <2> or the polycarbonate resin composition described in the above <4>, having a refractive index of 1.570 to 1.645.
<8> The polycarbonate resin described in the above <1> or <2> or the polycarbonate resin composition described in the above <4>, having a weight average molecular weight (Mw) of 10000 to 100000.
<9> The polycarbonate resin described in the above <1> or <2> or the polycarbonate resin composition described in the above <4>, having a retention of weight average molecular weight being 50% to 150%.
<10> An optical member containing the polycarbonate resin described in the above <1> or <2> or the polycarbonate resin composition described in the above <4>.
<11> An optical lens containing the polycarbonate resin described in the above <1> or <2> or the polycarbonate resin composition described in the above <4>.
<12> An optical film containing the polycarbonate resin described in the above <1> or <2> or the polycarbonate resin composition described in the above <4>.
<13> A member for vehicle-mounting containing the polycarbonate resin described in the above <1> or <2> or the polycarbonate resin composition described in the <4>.

### Advantageous Effects of Invention

The present invention can provide a thermoplastic resin composition with excellent optical properties, having high fluidity and good moldability without compromising the properties of optical resin compositions, and having a compositional makeup that can prevent gelatinization (increase in molecular weight).

### Brief Description of Drawing

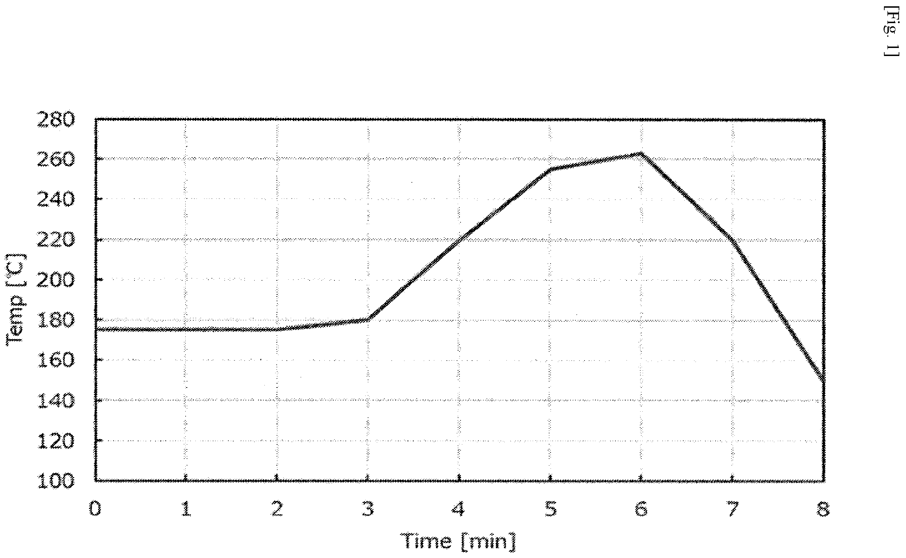

[Fig. 1] shows a reflow temperature profile obtained by conducting a reflow heat resistance test on a resin composition of the present invention.

### Description of Embodiments

In the present invention, a thermoplastic resin may be any one of polycarbonate resin, polyester carbonate resin and polyester resin. An example using polycarbonate resin is described below.

### 1. Polycarbonate resin

A polycarbonate resin according to the present invention contains a constituent unit (A) derived from a diol represented by the formula (1) below and a constituent unit (B) represented by the formula (2) below and/or a constituent unit (C) represented by the formula (3) below:

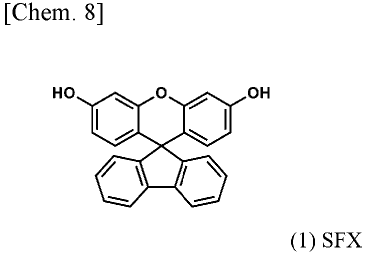

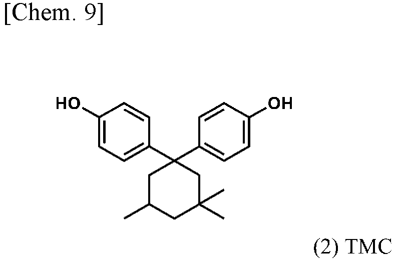

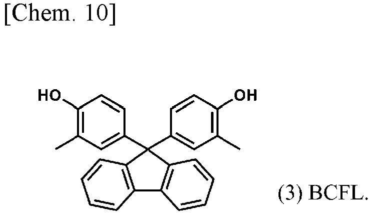

In an embodiment of the present invention, the polycarbonate resin contains a constituent unit (A) derived from a diol represented by the above formula (1) and a constituent unit (B) represented by the above formula (2).

In an embodiment of the present invention, the polycarbonate resin contains a constituent unit (A) derived from a diol represented by the above formula (1) and a constituent unit (C) represented by the above formula (3).

In an embodiment of the present invention, the polycarbonate resin contains a constituent unit (A) derived from a diol represented by the above formula (1), a constituent unit (B) represented by the above formula (2) and a constituent unit (C) represented by the above formula (3).

As described above, the polycarbonate resin containing a constituent unit (A) alone has poor moldability due to its extremely high Tg and moreover tends to increase its molecular weight since gelatinization probably attributed to branching would occur when heated, and such a polycarbonate resin becomes prone to uncontrollable trouble during extrusion or molding. However, such unexpected molecular weight increase can be controlled by adding a constituent unit (B) and/or a constituent unit (C) to a constituent unit (A).

In an embodiment of the present invention, the molar ratio of the constituent unit (A) to the constituent unit (B) and/or the constituent unit (C) (A : B + C) may be 20 : 80 to 80 : 20, preferably 30 : 70 to 70 : 30, and more preferably 40 : 60 to 40 : 60. In an embodiment of the present invention, the molar ratio of the constituent unit (A) to the constituent unit (B) and/or the constituent unit (C) (A : B + C) is 20 : 80 to 80 : 20. In a more preferable embodiment of the present invention, the molar ratio of the constituent unit (A) to the constituent unit (B) and/or the constituent unit (C) (A : B + C) is 30 : 70 to 70 : 30. In a still more preferable embodiment of the present invention, the molar ratio of the constituent unit (A) to the constituent unit (B) and/or the constituent unit (C) (A : B + C) is 40 : 60 to 40 : 60. In an embodiment of the present invention, the molar ratio of the constituent unit (A) to the constituent unit (B) and/or the constituent unit (C) (A : B + C) may be for example 20 : 80, 30 : 70, 40 : 60, 50 : 50, 40 : 60, 70 : 30, 80 : 20. In a molar ratio of the constituent unit (A) to the constituent unit (B) and/or the constituent unit (C) (A : B + C) within the above range, the molecular weight increase can be controlled as described above.

### 2. Polycarbonate resin composition

The resin composition of the present invention contains the above polycarbonate resin and one or more of compounds represented by the formulae (4), (5), (6), (7) and (8) below. By containing, in the polycarbonate resin composition, the above polycarbonate resin and one or more of the compounds represented by the formulae (4), (5), (6), (7) and (8) below as a compounding agent, a thermoplastic resin composition with excellent optical properties, having high fluidity and good moldability without compromising properties of optical resin compositions, and having a compositional makeup that can prevent gelatinization (increase in molecular weight) can be obtained. By adding to the above polycarbonate resin, one or more of the compounds represented by the above formulae (4), (5), (6), (7) and (8) as a compounding agent, an increase in molecular weight can further be suppressed:

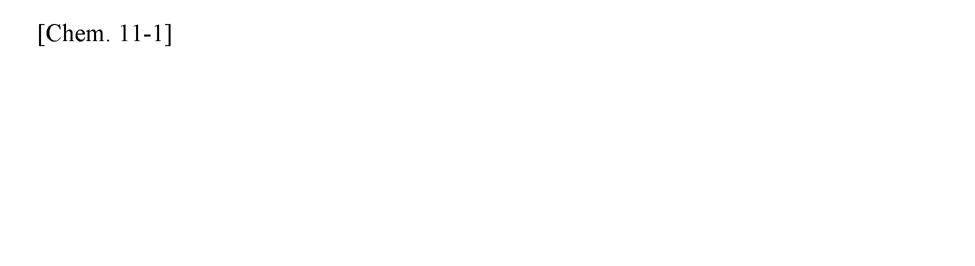

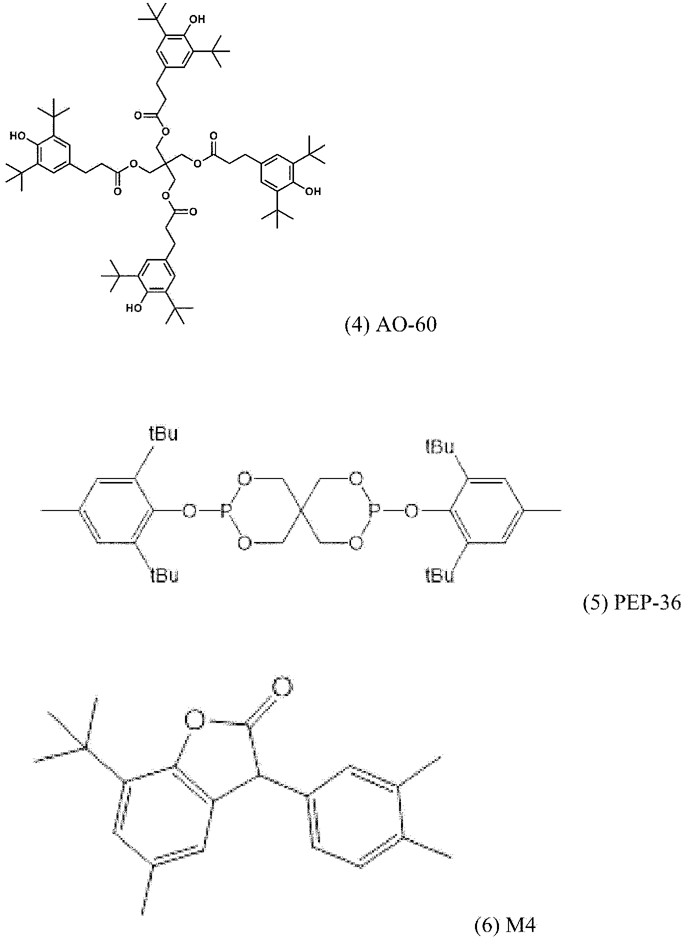

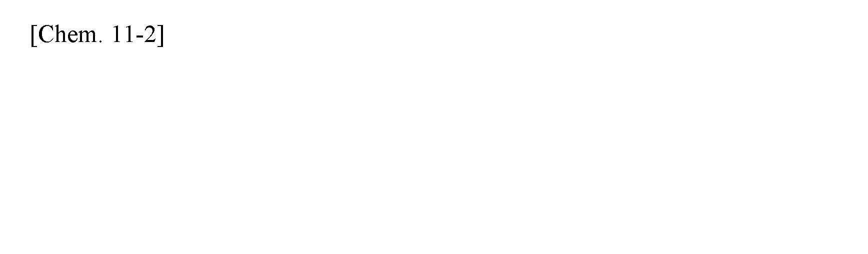

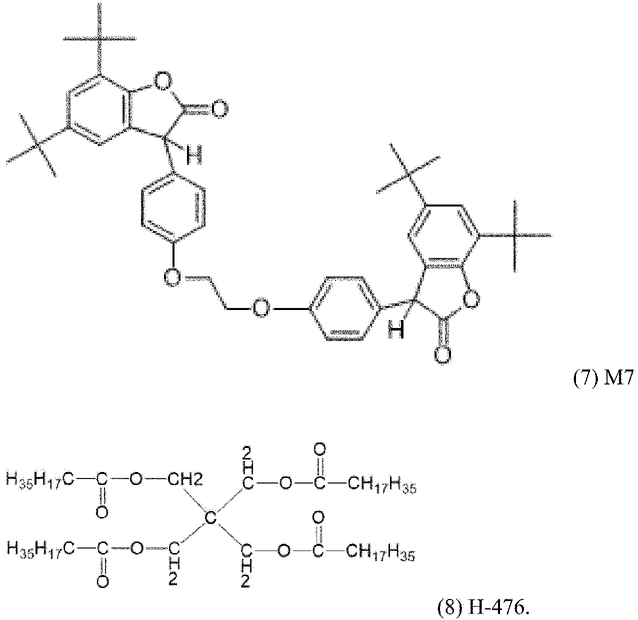

In an embodiment of the present invention, a polycarbonate resin composition containing the above polycarbonate resin and a compound represented by the formula (4) below is provided. By containing the above polycarbonate resin and a compound represented by the formula (4) below as a compounding agent, a thermoplastic resin composition with excellent optical properties, having high fluidity and good moldability without compromising the properties of optical resin compositions, and having a compositional makeup that can prevent gelatinization (increase in molecular weight) can be obtained:

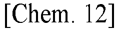

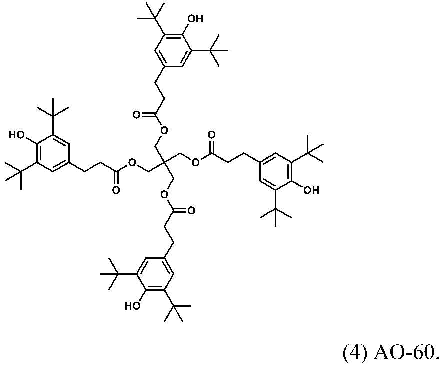

By adding a compound represented by the above formula (4) as a compounding agent to the above polycarbonate resin, an increase in molecular weight can further be suppressed.

In an embodiment of the present invention, compounds represented by the above formulae (4), (5), (6), (7) and (8) may be contained in the polycarbonate resin composition, in an amount of 1 ppm to 1% by mass, preferably 100 ppm to 1% by mass, more preferably 500 ppm to 1500 ppm and still more preferably 500 ppm to 1000 ppm. In an embodiment of the present invention, a polycarbonate resin composition in which 1 ppm to 1% by mass of a compound represented by the above formula (4) is contained in the above polycarbonate resin composition is provided. In a preferable embodiment of the present invention, a polycarbonate resin composition in which 100 ppm to 1% by mass of a compound represented by the above formula (4) is contained in the above polycarbonate resin composition is provided. In a more preferable embodiment of the present invention, a polycarbonate resin composition in which 500 ppm to 1500 ppm of a compound represented by the above formula (4) is contained in the above polycarbonate resin composition is provided. In a still more preferable embodiment of the present invention, a polycarbonate resin composition in which 500 ppm to 1000 ppm of a compound represented by the above formula (4) is contained in the above polycarbonate resin composition is provided. By containing a compound represented by the above formula (4) in the above polycarbonate resin composition in amounts within the above ranges, an increase in molecular weight can further be suppressed.

### 3. Physical properties of polycarbonate resin compositions

### (1) Glass transition temperature (Tg)

The glass transition temperature (Tg) was measured using a differential scanning calorimeter (DSC).
Measurement apparatus: Differential scanning calorimeter (DSC-50), produced by Shimadzu Corporation
Heating rate: 10°C / min
Gas-flow atmosphere: Nitrogen 20 mL / min
Sample pretreatment: Heating and melting at 300°C

The polycarbonate resin composition of the present invention may have a glass transition temperature (Tg) of 230°C to 290°C, preferably 240°C to 280°C, more preferably 245°C to 280°C and still more preferably 250°C to 270°C. In an embodiment of the present invention, the polycarbonate resin composition has a glass transition temperature (Tg) of 230°C to 290°C. In a preferable embodiment of the present invention, the polycarbonate resin composition has a glass transition temperature (Tg) of 240°C to 280°C. In a more preferable embodiment of the present invention, the polycarbonate resin composition has a glass transition temperature (Tg) of 245°C to 280°C. In a still more preferable embodiment of the present invention, the polycarbonate resin composition has a glass transition temperature (Tg) of 250°C to 270°C.

### (2) Refractive index (nd)

A polycarbonate resin or a polycarbonate resin composition was dissolved in dichloromethane to prepare a 10% by mass resin solution. In a 150 mL New disposable cup produced by K.K. Teraoka, 9.2 g of the prepared solution was weighed and was dried at room temperature for 24 hours and further at 120°C for 24 hours to produce a specimen with a thickness of 0.5 mm, which was subjected to measurement using the apparatus and measurement wavelength below.
Measurement apparatus: Abbemat Mw, produced by Anton Paar GmbH
Measurement wavelength: 587.6 nm

The polycarbonate resin composition of the present invention may have a refractive index of 1.570 to 1.645, preferably 1.580 to 1.640, more preferably 1.590 to 1.630, and still more preferably 1.600 to 1.620. In an embodiment of the present invention, the refractive index of the polycarbonate resin composition is 1.570 to 1.645. In a preferable embodiment of the present invention, the refractive index of the polycarbonate resin composition is 1.580 to 1.640. In a more preferable embodiment of the present invention, the refractive index of the polycarbonate resin composition is 1.590 to 1.630. In a still more preferable embodiment of the present invention, the refractive index of the polycarbonate resin composition is 1.600 to 1.620.

### (3) Weight average molecular weight (Mw)

Using a gel permeation chromatograph (GPC), the polystyrene conversion molecular weight (Mw) of a polycarbonate resin or a polycarbonate resin composition was measured under the conditions below:
Measurement conditions
Measurement apparatus: HLC-8320GPC, produced by Tosoh Corporation
Column: Shodex K-G+K-805L x 2 units +K-800D
Eluent: Chloroform
Temperature: Column thermostat at 40°C
Flow rate: 1.0 mL / min
Concentration: 0.1 wt / vol%
Injection amount: 100 µL
Pretreatment: Filtration through a 0.45 µm filter
Detector: UV refractometer
Standard polystyrene: EasiCal Type PS-1 polystyrene, produced by GL Sciences Inc.

The polycarbonate resin composition of the present invention may have a weight average molecular weight (Mw) of 10000 to 100000, preferably 20000 to 70000, more preferably 30000 to 60000, and still more preferably 30000 to 55000. In an embodiment of the present invention, the polycarbonate resin composition has a weight average molecular weight (Mw) of 10000 to 100000. In a preferable embodiment of the present invention, the polycarbonate resin composition has a weight average molecular weight (Mw) of 20000 to 70000. In a more preferable embodiment of the present invention, the polycarbonate resin composition has a weight average molecular weight (Mw) of 30000 to 60000. In a still more preferable embodiment of the present invention, the polycarbonate resin composition has a weight average molecular weight (Mw) of 30000 to 55000.

### (4) Molecular weight (Mw) after heating

In a test tube, 5 g of the obtained polycarbonate resin or polycarbonate resin composition was placed. The test tube was heated with a block heater at 380°C for 30 minutes and the Mw was measured in the same manner as described in the above (3).

The polycarbonate resin composition of the present invention may have a molecular weight (Mw) after heating of 5000 to 150000, preferably 10000 to 100000, more preferably 20000 to 70000 and still more preferably 20000 to 50000. In an embodiment of the present invention, the polycarbonate resin composition has a molecular weight (Mw) after heating of 5000 to 150000. In a more preferable embodiment of the present invention, the polycarbonate resin composition has a molecular weight (Mw) after heating of 10000 to 100000. **In** a still more preferable embodiment of the present invention, the polycarbonate resin composition has a molecular weight (Mw) after heating of 20000 to 50000.

### (5) Mw retention (%)

Calculation was performed based on the (formula 1) below, using the molecular weights (Mw) measured in the above (3) and (4). Mw retention (%) = Molecular weight (Mw) after heating / Molecular weight (Mw) x 100 (formula 1)

The polycarbonate resin composition of the present invention may have an Mw retention of 50% to 150%, preferably 60% to 150%, more preferably 60% to 100%, still more preferably 70% to 100% and still more preferably 80% to 90%. In an embodiment of the present invention, the polycarbonate resin composition has an Mw retention of 50% to 150%. In a preferable embodiment of the present invention, the polycarbonate resin composition has an Mw retention of 60% to 150%. In a more preferable embodiment of the present invention, the polycarbonate resin composition has an Mw retention of 60% to 100%. In a still more preferable embodiment of the present invention, the polycarbonate resin composition has an Mw retention of 70% to 100%. In a still more preferable embodiment of the present invention, the polycarbonate resin composition has an Mw retention of 80% to 90%.

### (6) Reflow heat resistance

Labor-saving in the manufacturing process of resin lenses is demanded for optical members, for example a part of precision lenses for vehicle-mounted cameras or sensing, and optical resins having reflow heat resistance are required. Ordinarily, a reflow step for soldering an electronic component requires heating to a maximum temperature of approximately 260°C; however, conventional thermoplastic resin lenses do not have enough heat resistance to withstand such a step, and thus a lens-assembly step must be provided separately. However, when the resin of the present invention is used, there is no need to separately assemble lenses after a reflow step since the lenses also have enough heat resistance to withstand a soldering reflow step at a temperature of 260°C, and thus labor-saving in the manufacturing process can be anticipated.

The polycarbonate resin composition of the present invention has a good reflow heat resistance. The reflow heat resistance of the polycarbonate resin composition of the present invention was determined on a specimen with a thickness of 0.8 mm and a specimen with a thickness of 2.0 mm in accordance with IPC/JEDEC J-STD-020E.

### - Molding of 0.8 mm thickness specimen

The obtained polycarbonate resin was molded into a disk with a thickness of 0.8 mm and a diameter of 4 cm using a press molding machine.

Molding machine: Compression molding machine NS-37, produced by Shinto Metal Industries, Ltd.

Molding conditions: Press force 210 kgf / cm², press temperature 300°C x 5 minutes

### - Molding of 2.0 mm thickness specimen

The obtained polycarbonate resin was molded into a disk with a thickness of 2.0 mm and a diameter of 4 cm using a press molding machine.

Molding machine: Compression molding machine NS-37, produced by Shinto Metal Industries, Ltd.

Molding conditions: Press force 210 kgf / cm², press temperature 300°C x 5 minutes

### - Reflow heat resistance test

Under the conditions below, the reflow temperature profile was measured. The obtained reflow temperature profile is shown in Fig. 1.
Apparatus: Reflow furnace TNV-568EM-P, produced by Tamura Corporation
Number of repetitions: 3 times

### - Determination

The reflow heat resistance was determined on the basis of the change in the total light transmittance (%) and the change in the yellow index (YI) of the molded specimen before and after the reflow heat resistance test. Specifically, both changes were calculated based on the formulae below: Change in total light transmittance = Total light transmittance (%) before reflow test / Total light transmittance (%) after reflow test Change in yellow index (YI) of molded specimen = YI before reflow test / YI after reflow test

The closer both the change in total light transmittance and the change in YI are to 1.0, the smaller the change due to reflow is, which shows high reflow heat resistance.

### (7) Total light transmittance (%)

The total light transmittance (%) of a molded specimen was measured as described below:

### - Total light transmittance (%)

Total light transmittance was measured using the apparatus below in accordance with JIS-K-7361.
Measurement apparatus: Haze meter SH-7000 produced by Nippon Denshoku Industries Co., Ltd.
Measurement wavelength: 380 nm to 780 nm

### (8) Molded specimen yellow index (YI)

The molded specimen YI was measured as described below.

### - Molded specimen YI

The molded specimen YI was measured using the apparatus below in accordance with JIS-K-7373.
Measurement apparatus: Haze meter SH-7000, produced by Nippon Denshoku Industries Co., Ltd.
Measurement wavelength: 380 nm to 780 nm

### (9) Solution yellow index (YI)

The polycarbonate resin composition in an amount of 6 g was dissolved in 60 mL of dichloromethane to prepare a resin solution having a concentration of 0.1 g/mL. Sixty mL of the prepared solution was weighed in a quartz cell and was subjected to measurement using the following apparatus and wavelength.
Measurement apparatus: Haze meter SH-7000, produced by Nippon Denshoku Industries Co., Ltd.
Measurement wavelength: 380 nm to 780 nm

### 4. Production method of polycarbonate resin

The polycarbonate resin may be produced by a usual method.

In a phosgene method, a reaction between a diol and phosgene is effectuated ordinarily in the presence of an acid binding agent and a solvent. As the acid binding agent, pyridine, or an alkaline metal hydroxide such as sodium hydroxide or potassium hydroxide is used for example, and as the solvent, methylene chloride or chloroform is used for example. Further, to facilitate a condensation polymerization reaction, a catalyst for example a tertiary amine such as triethylamine or a quaternary ammonium salt such as benzyltriethylammonium chloride is preferably used. Further, for polymerization degree adjustment, a monofunctional compound such as phenol, p-t-butylphenol, p-cumylphenol or an alkyl-substituted phenol is preferably added as a molecular weight adjusting agent. In addition, if needed, a small amount of an antioxidant such as sodium sulfite or hydrosulfite or a branching agent such as phloroglucin or isatinbisphenol may be added. It is appropriate that the reaction temperature is ordinarily within a range of 0°C to 150°C and preferably 5°C to 40°C. The reaction time depends on the reaction temperature but is ordinarily 0.5 minutes to 10 hours and preferably 1 minute to 2 hours. During the reaction, it is preferred to maintain the reaction system at a pH of 10 or higher.

In contrast, in a transesterification method, a diol is mixed with a bisaryl carbonate and the obtained mixture is reacted at a high temperature under a reduced pressure. Examples of bisaryl carbonates include diphenyl carbonate, di-p-tolylcarbonate, phenyl-p-tolylcarbonate, di-p-chlorophenylcarbonate, and dinaphtylcarbonate. These compounds may be used alone or two or more thereof may be used together. The reaction is performed at a temperature ordinarily within a range of 150°C to 350°C, and preferably within a range of 200°C to 300°C; in addition, the degree of pressure reduction is adjusted such that the final degree of pressure reduction is preferably 1 mmHg or lower, by which phenols derived from the bisaryl carbonate(s) generated by the transesterification reaction is distilled off out of the system. The reaction time depends on the reaction temperature or the degree of pressure reduction but is ordinarily approximately 1 hour to 24 hours. The reaction is preferably performed in an inert gas atmosphere such as nitrogen or argon.

The content of the dicarboxylic acid chloride or phosgene, or the bisaryl carbonate component is, relative to 100 mol% of dicarboxylic acid components, preferably less than 42 mol%, more preferably less than 30 mol%, still more preferably less than 20 mol%.

### <Additives>

To the thermoplastic resin of the present invention, additives such as a heat stabilizer, an antioxidant, a mold release agent, a plasticizer, a filler, a UV absorber, a corrosion inhibitor, a dispersant, a defoaming agent and a levelling agent may be suitably added, depending on necessity; such thermoplastic resin may be used as a thermoplastic resin composition.

As a mold release agent, those in which 90% by weight or more is made up of an ester of an alcohol and a fatty acid are preferable. Specific examples of the ester of an alcohol and a fatty acid include an ester of a monovalent alcohol and a fatty acid and/or a partial or whole ester of a polyhydric alcohol and a fatty acid. As the ester of a monovalent alcohol and a fatty acid, an ester of a monovalent alcohol having 1 to 20 carbon atoms and a saturated fatty acid having 10 to 30 carbon atoms is preferable. **In** addition, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferable. Specifically, examples of the ester of a monovalent alcohol and a saturated fatty acid include stearyl stearate, palmityl palmitate, butyl stearate, methyl laurate and isopropyl palmitate, and stearyl stearate is preferable.

Specifically, examples of the partial ester or whole ester of a polyhydric alcohol and a saturated fatty acid include stearic acid monoglyceride, stearic acid diglyceride, stearic acid triglyceride, stearic acid monosorbitate, behenic acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and the whole ester or partial ester of dipentaerythritol such as dipentaerythritol hexastearate. Among these esters, stearic acid monoglyceride, stearic acid triglyceride, pentaerythritol tetrastearate, and a mixture of stearic acid triglyceride and stearyl stearate are preferably used.

Assuming that the amount of a mold release agent is 100% by weight, the amount of the ester in the mold release agent is preferably 90% by weight or more, and more preferably 95% by weight or more.

The amount of a mold release agent mixed with the thermoplastic resin composition is, relative to 100 parts by weight of the thermoplastic resin, preferably within a range of 0.005 parts by weight to 2.0 parts by weight, more preferably within a range of 0.01 parts by weight to 0.6 parts by weight, and still more preferably within a range of 0.02 parts by weight to 0.5 parts by weight.

Examples of heat stabilizers include phosphorus-based heat stabilizers, sulfur-based heat stabilizers and hindered phenol-based heat stabilizers.

As a phosphorus-based heat stabilizer, tetrakis(2,4-di-tert-butylphenyl)-4,4'-biphenylenediphosphonite is preferably used.

The content of a phosphorus-based heat stabilizer in the thermoplastic resin is preferably 0.001 parts by weight to 0.2 parts by weight relative to 100 parts by weight of the thermoplastic resin.

As a hindered phenol-based heat stabilizer, octadecyl-3-(3,5-di-tert-butyl-4-hydroxyphenyl)propionate is particularly preferably used.

The content of a hindered phenol-based heat stabilizer in the thermoplastic resin is preferably 0.001 parts by weight to 0.3 parts by weight relative to 100 parts by weight of the thermoplastic resin.

As a UV absorber, at least one type of a UV absorber selected from the group consisting of benzotriazole-based UV absorbers, benzophenone-based UV absorbers, triazine-based UV absorbers, cyclic imino ester-based UV absorbers and cyanoacrylate-based UV absorbers is preferable.

More preferably, a benzotriazole-based UV absorber is 2-(2-hydroxy-5-tert-octylphenyl) benzotriazole, or 2,2'-methylenebis[4-(1,1,3,3-tetramethylbutyl)-6-(2H-benzotriazole-2-yl)phenol]. Examples of benzophenone-based UV absorbers include 2-hydroxy-4-n-dodecyloxybenzophenone, and 2-hydroxy-4-methoxy-2'-carboxybenzophenone. Examples of triazine-based UV absorbers include 2-(4,6-diphenyl-1,3,5-triazine-2-yl)-5-[(hexyl)oxy]-phenol, and 2-(4,6-bis(2,4-dimethylphenyl)-1,3,5-triazine-2-yl)-5-[(octyl)oxy]-phenol. As a cyclic imino ester-based UV absorber, 2,2'-p-phenylenebis(3,1-benzoxazin-4-one) is particularly preferable.

The amount of a UV absorber to be mixed is, relative to 100 parts by weight of the thermoplastic resin, preferably 0.01 parts by weight to 3.0 parts by weight. Such amount within the above range can impart sufficient weatherability to thermoplastic resin molded products in accordance with their applications.

### <Production method of resin composition>

The production method of the resin composition is not particularly limited, and known methods may be applied to the production. In an embodiment, a production method of the resin composition includes a step of mixing the thermoplastic resin and a compounding agent. The method may further include a step of mixing a solvent and at least one of the additives. For example, a compounding agent and an additive are successively or simultaneously added to the thermoplastic resin and mixed therewith to produce a resin composition. The step of mixing may be performed by a usual method; for example, a method of kneading with an extruder, and a method of dissolving each of a resin and a compounding agent separately in a solvent (for example methylene chloride or THF) to give solutions and thereafter mixing the solutions with each other are mentioned.

### 2. Molded products

The resin composition of the present invention may be suitably used in optical members. In an embodiment of the present invention, optical members containing the resin composition of the present invention are provided. In an embodiment of the present invention, optical members include optical disks, transparent and electrically conductive substrates, optical cards, sheets, films, optical fibers, lenses, prisms, optical films, substrates, optical filters and hardcoat films, but are not limited thereto. Since the resin composition of the present invention has high fluidity and may be molded by a cast method, it is particularly suitable to the production of thin optical members. In a preferable embodiment of the present invention, optical members produced using the resin composition of the present invention may be optical lenses. In another preferable embodiment of the present invention, optical members produced using the resin composition of the present invention may be optical films.

When an optical member containing the resin composition of the present invention is produced by injection molding, molding in an embodiment is preferably performed under the conditions of a cylinder temperature being 260°C to 350°C and a mold temperature being 90°C to 170°C. More preferably, molding is performed under the conditions of a cylinder temperature being 270°C to 320°C and a mold temperature being 100°C to 160°C. When a cylinder temperature is higher than 350°C, the resin composition decomposes and stains and when a cylinder temperature is lower than 260°C, the resin composition is prone to difficulty in molding due to its high melting viscosity. In addition, when a mold temperature is higher than 170°C, a molded specimen made of the resin composition is prone to difficulty in removing from a mold. In contrast, when a mold temperature is lower than 90°C, the shape of a molded specimen tends to be difficult to control since the resin in the mold sets too fast during molding, or otherwise, a pattern provided to the mold tends to be difficult to sufficiently transfer.

When an optical member containing the resin composition of the present invention is produced by injection molding, molding in another embodiment may be preferably performed under the conditions of a cylinder temperature being 350°C to 450°C and a mold temperature being 180°C to 290°C. In this embodiment, it is preferred that molding is performed more preferably under the conditions of a cylinder temperature being 360°C to 420°C and a mold temperature being 190°C to 280°C. When a cylinder temperature is higher than 450°C, the resin composition decomposes and stains and when a cylinder temperature is lower than 350°C, the resin composition is prone to difficulty in molding due to its high melting viscosity. In addition, when a mold temperature is higher than 280°C, a molded specimen made of the resin composition is prone to difficulty in removing from a mold. In contrast, when a mold temperature is lower than 180°C, the shape of a molded specimen tends to be difficult to control since the resin in the mold sets too fast during molding, or otherwise, a pattern provided to the mold tends to be difficult to sufficiently transfer.

### <Optical lens>

In an embodiment of the present invention, the resin composition may be suitably used in optical lenses. Optical lenses produced using the resin composition of the present invention may be used in the field where expensive high refractive index glass lenses have been conventionally used, for example in telescopes, binoculars and television projectors, due to their high refractive indexes and excellent heat resistance; such optical lenses are thus significantly useful.

The optical lenses of the present invention suitably employ an aspheric lens shape depending on necessity. Since a single aspheric lens can reduce spherical aberration to virtually 0, there is no need to combine multiple spheric lenses to eliminate spherical aberration, which can reduce weight and molding costs. Accordingly, aspheric lenses are useful as optical lenses, particularly as camera lenses.

In addition, due to their high molding fluidity, the optical lenses of the present invention are particularly useful as a material of a thin and small optical lens having a complicated shape. Specific dimensions of the lens include a center thickness preferably being 0.05 mm to 3.0 mm, more preferably 0.05 mm to 2.0 mm and still more preferably 0.1 mm to 2.0 mm; and a diameter preferably being 1.0 mm to 20.0 mm, more preferably 1.0 mm to 10.0 mm and still more preferably 3.0 mm to 10.0 mm. In addition, the optical lenses of the present invention are preferably meniscus lenses in a shape having a convex surface on one side and a concave surface on the other side.

The optical lenses of the present invention are formed by any method such as die molding, metal cutting, polishing, laser beam machining, electric discharge machining or etching. Among these, die molding is more preferable from the aspect of production cost.

### <Optical film>

In an embodiment of the present invention, the resin composition may be suitably used in optical films. Optical films produced using the polycarbonate resin of the present invention are suitably used for example in films for liquid crystal substrates and optical memory cards, due to their excellent transparency and heat resistance.

To avoid contamination of optical films with foreign matter as much as possible, the molding environment must naturally be a low dust environment, preferably Class 6 or lower, and more preferably Class 5 or lower.

### <Members for vehicle-mounting>

In an embodiment of the present invention, the resin composition may be suitably used in members for vehicle-mounting. Members for vehicle-mounting produced using the polycarbonate resin of the present invention are suitably used for example in precision lenses for vehicle-mounted cameras and for sensing due to their excellent molding fluidity, transparency, heat resistance and reflow heat resistance.

### Examples

In the following section, examples of the present invention with comparative examples are described and the contents of invention are described in detail, but the present invention is not limited to these examples.

### (Example 1)

### (Step 1)

In 500 mL of a 9 w/w% aqueous sodium hydroxide solution, 49.1 g of spiro[fluorene-9,9'-xanthene]-3',6'-diol (SFX: produced by Taoka Chemical Co., Ltd.) and 50.9 g of biscresolfluorene (BCFL: produced by Honshu Chemical Industry Co., Ltd.) were added, namely in a ratio of SFX : BCFL = 50 : 50 (mol%), and 0.5 g of hydrosulfide was further added thereto and was dissolved therein. To the solution, 300 mL of dichloromethane and 0.1 g of triethylbenzylammonium chloride (TEBAC: produced by Fujifilm Wako Pure Chemical Corporation) were added, the temperature of the solution was set to 20°C under a stirring condition, and further 37.3 g of phosgene was blown thereinto for 30 minutes.

### (Step 2)

After the blowing of phosgene, 2.53 g of p-tert-butylphenol (PTBP) dissolved in 50mL of dichloromethane was added and vigorously stirred for 7 minutes to effectuate emulsification, thereafter 0.5 mL of triethylamine as a polymerization catalyst was added and polymerization was performed for approximately 30 minutes.

### (Post step)

The polymerization liquid was separated into an aqueous phase and an organic phase, the organic phase was neutralized with phosphoric acid and washed with pure water repeatedly until the wash liquid exhibited a pH of 7.0. From this purified polycarbonate resin, the organic solvent was distilled off by evaporation to obtain a polycarbonate resin powder. The polycarbonate resin powder was dried at a temperature of 120°C for 24 hours to completely distill off the solvent.

The physical properties of the obtained polycarbonate resin are shown in Table 1.

### (Example 2)

### (Additive mixing step)

Five grams of the polycarbonate resin obtained in Example 1, 0.005 g of a compound (AO-60, produced by K.K. ADEKA) represented by the formula (4) and 50 mL of methylene chloride were mixed and dissolved. The obtained solution was dried at a temperature of 120°C for 24 hours to eliminate methylene chloride and thereby a polycarbonate resin composition was obtained. The physical properties of the obtained polycarbonate resin composition are shown in Table 1.

### (Examples 3, 5, 7, 12, 14, Comparative Example 1)

A polycarbonate resin was obtained in the same manner as described in Example 1 except for replacing BCFL with 4,4'-(3,3,5-trimethylcyclohexylidene)bisphenol (TMC: produced by Honshu Chemical Industry Co., Ltd.) in a ratio shown in the table. The physical properties of the obtained polycarbonate resin are shown in Table 1.

### (Examples 4, 6, 8 to 11, 13, 15, Comparative Example 2)

A polycarbonate resin was obtained in the same manner as described in Example 2 except for changing the mixing amount of AO-60 to the amount shown in the table. The physical properties of the obtained polycarbonate resin are shown in Table 1.

### (Comparative Examples 3 to 7)

A polycarbonate resin was obtained in the same manner as described in Example 1 except for replacing SFX and BCFL with TMC and BCFL in the ratios shown in the table. The physical properties of the obtained polycarbonate resin are shown in Table 1.

**[Table 1]**

| | Constituent unit (A) | Constituent unit (B) | Constituent unit (C) | AO-60 | Tg | nd | Mw | Mw after heating | Mw retention (%) |
|---|---|---|---|---|---|---|---|---|---|
| | (mol%) | (mol%) | (mol%) | | (°C) | | | | |
| Example 1 | 50 | 0 | 50 | None | 263 | 1.641 | 31,500 | 44,200 | 140 |
| Example 2 | 50 | 0 | 50 | 1000ppm | 263 | 1.641 | 31,500 | 20,800 | 66 |
| Example 3 | 20 | 80 | 0 | None | 241 | 1.570 | 39,700 | 26,500 | 67 |
| Example 4 | 20 | 80 | 0 | 1000ppm | 241 | 1.570 | 39,700 | 23,000 | 58 |
| Example 5 | 30 | 70 | 0 | None | 251 | 1.579 | 38,800 | 27,900 | 72 |
| Example 6 | 30 | 70 | 0 | 1000ppm | 251 | 1.579 | 38,800 | 25,100 | 65 |
| Example 7 | 50 | 50 | 0 | None | 263 | 1.602 | 34,500 | 31,500 | 91 |
| Example 8 | 50 | 50 | 0 | 500ppm | 260 | 1.602 | 34,500 | 30,800 | 89 |
| Example 9 | 50 | 50 | 0 | 1000ppm | 260 | 1.602 | 34,500 | 27,600 | 80 |
| Example 10 | 50 | 50 | 0 | 1500ppm | 260 | 1.602 | 34,500 | 20,600 | 60 |
| Example 11 | 50 | 50 | 0 | 1% | 260 | 1.602 | 34,500 | 19,600 | 57 |
| Example 12 | 70 | 30 | 0 | None | 279 | 1.621 | 34,500 | 29,000 | 84 |
| Example 13 | 70 | 30 | 0 | 1000ppm | 279 | 1.621 | 34,500 | 29,400 | 85 |
| Example 14 | 80 | 20 | 0 | None | 286 | 1.630 | 31,000 | 27,600 | 89 |
| Example 15 | 80 | 20 | 0 | 1000ppm | 286 | 1.630 | 31,000 | 23,700 | 76 |
| Comparative Example 1 | 100 | 0 | 0 | None | 296 | 1.648 | 32,900 | 55,500 | 169 |
| Comparative Example 2 | 100 | 0 | 0 | 1000ppm | 296 | 1.648 | 32,900 | 61,300 | 186 |
| Comparative Example 3 | 0 | 80 | 20 | None | 224 | 1.568 | 41,600 | 30,800 | 74 |
| Comparative Example 4 | 0 | 80 | 20 | 1000ppm | 224 | 1.568 | 41,600 | 27,100 | 65 |
| Comparative Example 4 | 0 | 100 | 0 | None | 219 | 1.551 | 34,600 | 34,100 | 99 |
| Comparative Example 5 | 0 | 100 | 0 | 1000ppm | 219 | 1.551 | 34,600 | 24,400 | 71 |
| Comparative Example 6 | 0 | 0 | 100 | None | 235 | Unmeasurable* | 30,500 | 40,500 | 133 |
| Comparative Example 7 | 0 | 0 | 100 | 1000ppm | 235 | Unmeasurable* | 30,500 | 34,100 | 112 |
| *Refractive index could not be measured due to the cloudiness of the test specimen for refractive index measurement. | | | | | | | | | |

### (Example 16)

### (Step 1)

As raw materials, 63.8 g (0.18 mol) of spiro[fluorene-9,9'-xanthene]-3',6'-diol (SFX: produced by Taoka Chemical Co., Ltd.) and 36.2 g (0.12 mol) of 4,4'-(3,3,5-trimethylcyclohexylidene)bisphenol (TMC: produced by Honshu Chemical Industry Co., Ltd.), in other words in a ratio of SFX : TMC = 60 : 40 (mol%), and further 0.5 g of hydrosulfide were added and dissolved. To the solution, 300 mL of dichloromethane and 0.1 g of triethylbenzylammonium chloride (TEBAC: produced by Fujifilm Wako Pure Chemical Corporation) were added, the temperature of the solution was set to 20°C under a stirring condition, and further 40.5 g of phosgene was blown thereinto for 30 minutes.

### (Step 2)

After the blowing of phosgene, 2.74 g of p-tert-butylphenol (PTBP) dissolved in 50mL of dichloromethane was added and vigorously stirred for 7 minutes to effectuate emulsification, thereafter 0.5 mL of triethylamine as a polymerization catalyst was added and polymerization was performed for approximately 30 minutes.

### (Post step)

The polymerization liquid was separated into an aqueous phase and an organic phase, the organic phase was neutralized with phosphoric acid and washed with pure water repeatedly until the wash liquid exhibited a pH of 7.0. From this purified polycarbonate resin, the organic solvent was distilled off by evaporation to obtain a polycarbonate resin powder. The polycarbonate resin powder was dried at a temperature of 120°C for 24 hours to completely distill off the solvent.

The reflow heat resistance of the polycarbonate resins obtained in Example 16 and Comparative Example 4 are summarized in Table 2.

**[Table 2]**

| | | Example 16 | | Comparative Example 4 | |
|---|---|---|---|---|---|
| | | SFX/TMC=60/40 | | TMC=100 | |
| | Test specimen thickness | 0.8 mm | 2 mm | 0.8 mm | 2 mm |
| Before reflow heat resistance test | Total light transmittance (%) | 86.7 | 85.9 | 88.0 | 86.5 |
| | Molded specimen YI | 5.2 | 10.2 | 2.3 | 3.5 |
| After Reflow heat resistance test | Total light transmittance (%) | 87.0 | 84.9 | 81.0 | 79.9 |
| | Molded specimen YI | 6.3 | 12.7 | 10.6 | 15.2 |
| Determination | Change of total light transmittance | 1.0 | 1.0 | 1.1 | 1.1 |
| | Change of molded specimen YI | 0.8 | 0.8 | 0.2 | 0.2 |

In addition, the obtained polycarbonate resin had a Tg of 260°C, nd of 1.613, and Mw of 41,600. The physical properties of the obtained polycarbonate resin are shown in Table 3.

### (Example 16-1)

Two kilograms of the polycarbonate resin obtained in Example 7 and as additives, 2 g (1000 ppm) of AO-60, 0.6 g (300 ppm) of ADEKASTAB PEP-36 (produced by K.K. ADEKA) and 3.0 g (1500 ppm) of UNISTER H476 (produced by NOF Corporation) were mixed and molten kneaded with a twin screw kneading extruder TEM-18 (produced by Shibaura Machine Co., Ltd.) at a cylinder temperature of 350°C and a discharge rate of 4 kg / hr to obtain pellets of the polycarbonate resin composition. The physical properties of the obtained polycarbonate resin composition are shown in Table 3.

### (Examples 16-2 to 16-3)

Pellets of polycarbonate resin compositions were obtained in the same manner as described in Example 16-1 except for replacing the additives with those described in Table 3. The physical properties of the obtained polycarbonate resin compositions are shown in Table 3.

### (Example 16-a)

Pellets of a polycarbonate resin were obtained in the same manner as described in Example 16-1 except for adding no additive. The physical properties of the obtained polycarbonate resin are shown in Table 3.

**[Table 3]**

| | Constituent unit (A) | Constituent unit (B) | AO-60 | PEP-36 | Compound (M4) | Compound (M7) | H-476 | Tg | nd | Mw | Solution YI |
|---|---|---|---|---|---|---|---|---|---|---|---|
| | (mol%) | (mol%) | | | | | | (°C) | | | |
| Example 16 | 60 | 40 | 0 | 0 | 0 | 0 | 0 | 261 | 1.613 | 41600 | 4.3 |
| Example 16-a | 60 | 40 | 0 | 0 | 0 | 0 | 0 | 261 | 1.613 | 35300 | 37.7 |
| Example 16-1 | 60 | 40 | 1000 ppm | 300ppm | 0 | 0 | 1500ppm | 261 | 1.613 | 40500 | 14.7 |
| Example 16-2 | 60 | 40 | 1000 ppm | 300ppm | 200ppm | 0 | 1500ppm | 261 | 1.613 | 40900 | 8.4 |
| Example 16-3 | 60 | 40 | 1000 ppm | 300ppm | 0 | 200Pppm | 1500ppm | 261 | 1.613 | 37600 | 15.2 |

As shown in Tables 1 to 3, the resin compositions of the present invention are thermoplastic resin compositions with excellent optical properties, having high fluidity and good moldability without compromising the properties of optical resin compositions, having a compositional makeup that can prevent gelatinization (increase in molecular weight), and having high reflow heat resistance. According to the present invention, this resin composition enables the precision molding of optical members such as optical lenses and optical films and members for vehicle-mounting.

## Claims

1. A polycarbonate resin comprising
a constituent unit (A) derived from a diol represented by the formula (1) below, and
a constituent unit (B) represented by the formula (2) below and/or a constituent unit (C) represented by the formula (3) below:

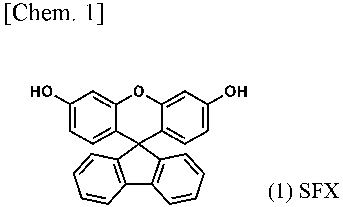

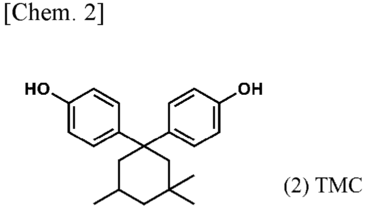

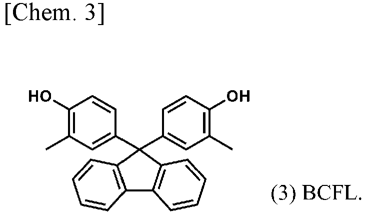

2. A polycarbonate resin comprising at least a constituent unit (A) derived from a diol represented by the formula (1) below and a constituent unit (B) derived from a diol represented by the formula (2) below: 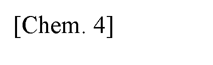 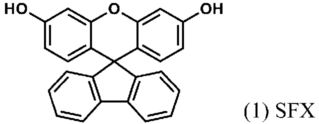 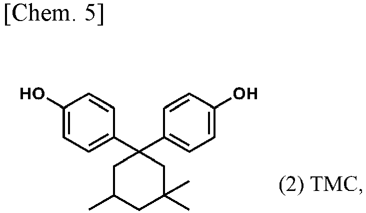 total light transmittances before and after a reflow heat resistance test satisfying a relationship represented by the formula (I) below: Total light transmittance before reflow heat resistance test (%) / Total light transmittance after reflow heat resistance test (%) = 0.9 to 1.3 (I).

3. The polycarbonate resin according to claim 1 or 2, wherein the molar ratio of the constituent unit (A) to the constituent unit (B) and/or the constituent unit (C) (A : B + C) is 20 : 80 to 80 : 20.

4. A polycarbonate resin composition comprising the polycarbonate resin according to claim 1 or 2 and one or more of compounds represented by the formulae (4), (5), (6), (7) and (8) below:

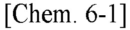

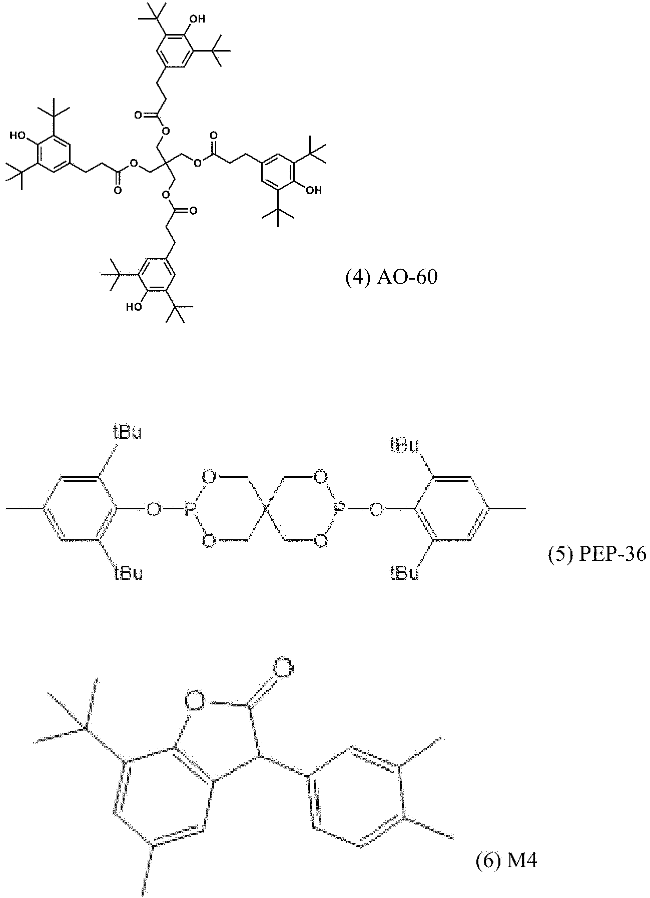

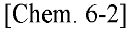

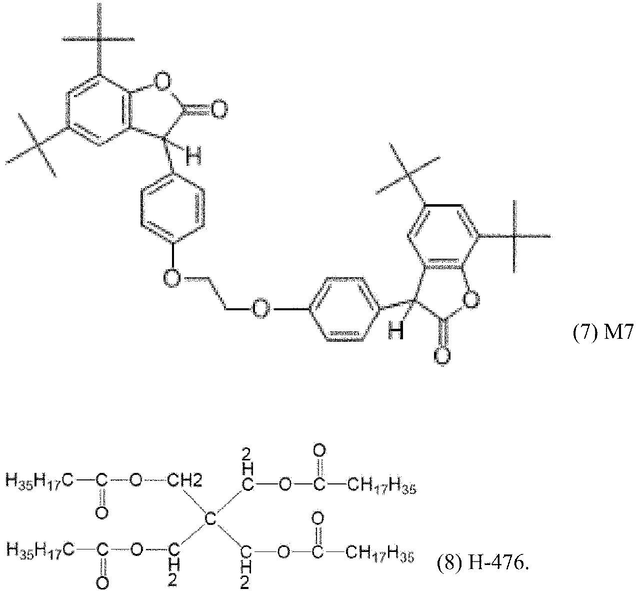

5. The polycarbonate resin composition according to claim 4, comprising 1 ppm to 1% by mass of the compounds represented by the formulae (4), (5), (6), (7) and (8).

6. The polycarbonate resin according to claim 1 or 2 or the polycarbonate resin composition according to claim 4, having a glass transition temperature (Tg) of 230°C to 290°C.

7. The polycarbonate resin according to claim 1 or 2 or the polycarbonate resin composition according to claim 4, having a refractive index of 1.570 to 1.645.

8. The polycarbonate resin according to claim 1 or 2 or the polycarbonate resin composition according to claim 4, having a weight average molecular weight (Mw) of 10000 to 100000.

9. The polycarbonate resin according to claim 1 or 2 or the polycarbonate resin composition according to claim 4, having a retention of weight average molecular weight being 50% to 150%.

10. An optical member comprising the polycarbonate resin according to claim 1 or 2 or the polycarbonate resin composition according to claim 4.

11. An optical lens comprising the polycarbonate resin according to claim 1 or 2 or the polycarbonate resin composition according to claim 4.

12. An optical film comprising the polycarbonate resin according to claim 1 or 2 or the polycarbonate resin composition according to claim 4.

13. A member for vehicle-mounting comprising the polycarbonate resin according to claim 1 or 2 or the polycarbonate resin composition according to claim 4.
